# FASCICULE DE BREVET EUROPEEN

(11) **EP 2 093 095 B1**
(45) Date de publication et mention de la délivrance du brevet: **29.08.2018**
(21) Numéro de dépôt: 09153213.5
(22) Date de dépôt: 19.02.2009
(51) Int. Cl.: B60L 1/00, H02K 9/00, B61C 3/00

(54) **Architecture d'un réseau d'alimentation auxiliaire répartie.**
Aufbau eines verteilten Hilfsstromversorgungsnetzes
Architecture of a distributed auxiliary supply network

(30) Priorité: 20.02.2008 FR 0851092
(43) Date de publication de la demande: 26.08.2009
(73) Titulaire: ALSTOM Transport Technologies, 93400 Saint-Ouen (FR)
(72) Inventeur: Giacomoni, Olivier, 65290, Juillan (FR); Desportes, Guillaume, 65700, Maubourguet (FR); Belin, Sébastien, 65800, Aureilhan (FR); Cypers, David, 65310, Odos (FR)
(74) Mandataire: Lavoix

(56) Documents cités:
- EP-A- 1 864 846
- DE-U1- 29 622 811
- JP-A- 54 157 913
- JP-A- 2007 062 694

## Description

L'invention se rapporte à un train de voitures ferroviaires comprenant un premier réseau d'alimentation, dit de traction, destiné à alimenter les moteurs de traction, et un deuxième réseau d'alimentation électrique, dit auxiliaire, destiné à alimenter des charges électriques auxiliaires embarquées.

Le document JP 2007 062694 A décrit un convertisseur de puissance avec un refroidissement par liquide pour un véhicule ferroviaire, le document DE 296 22 811 U1 un système de refroidissement pour une chaîne de traction et les documents JP 54 157913 A et EP 1 864 846 A décrivent respectivement un procédé d'alimentation pour un véhicule ferroviaire.

Jusqu'à présent, il est connu dans un train d'alimenter des charges électriques auxiliaires dites de confort à l'aide d'un même réseau d'alimentation triphasé de tension efficace fondamentale entre phases égale à par exemple 400 volts, dit réseau auxiliaire de confort, exclusivement dédié à ce type de charges.

Ces charges de confort comprennent notamment les appareils domestiques des passagers branchés à des prises 230 volts équipant les voitures, les appareils de chauffage de cuisine de la voiture bar, ou encore les climatiseurs.

Classiquement, le réseau d'alimentation auxiliaire de confort est alimenté par un ensemble redondé de deux convertisseurs auxiliaires de confort, de construction identique qui alimentent chacun la moitié du réseau. Chaque convertisseur auxiliaire est raccordé à une prise caténaire via une chaîne électrique de traction.

En cas de panne de l'un deux, l'autre convertisseur est prévu pour reprendre la totalité du réseau et ainsi assurer une disponibilité suffisante pour satisfaire les exigences de confort des passagers.

En service, les deux convertisseurs auxiliaires de confort fournissent à la totalité des charges de confort une puissance électrique importante pouvant aller jusqu'au Mégawatt et requièrent un refroidissement important du fait des pertes thermiques importantes engendrées.

Les deux convertisseurs auxiliaires sont alors refroidis traditionnellement par une ventilation à air qui est mise en oeuvre par un dispositif massif et encombrant.

Globalement, la structure de support et le système de refroidissement de l'ensemble des deux convertisseurs auxiliaires de confort présentent une masse importante.

Le problème technique est de diminuer significativement la masse globale du réseau d'alimentation auxiliaire et en particulier celle des convertisseurs auxiliaires.

A cet effet, l'invention a pour objet un train de voitures ferroviaires selon la revendication 1.

Suivant des modes particuliers de réalisation, le train comporte l'une ou plusieurs des caractéristiques selon les revendications 2 à 13.

L'invention sera mieux comprise à la lecture de la description d'une forme de réalisation qui va suivre, donnée uniquement à titre d'exemple et faite en se référant aux dessins sur lesquels :
- la Figure 1 est une vue schématique de l'architecture d'un réseau d'alimentation auxiliaire d'un train selon l'invention,
- la Figure 2 est une vue détaillée d'une partie du réseau d'alimentation auxiliaire décrit à la figure 1 incluant un convertisseur auxiliaire et une section connectée au convertisseur auxiliaire à laquelle est raccordé un ensemble de charges auxiliaires.

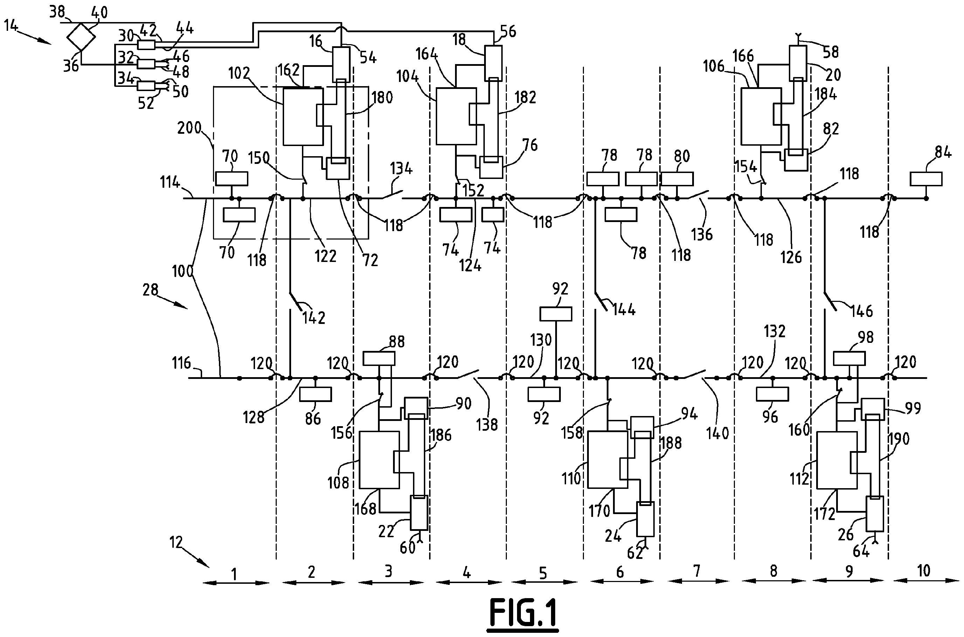

Comme le représente la figure 1, un train 12 de voitures ferroviaires destiné à transporter des passagers comprend une série de voitures numérotées de 1 à 10.

La train 12 comprend un premier réseau d'alimentation électrique 14, dit de traction, à tension élevée supérieure à 600 volts, destiné à alimenter six chaînes électriques de traction 16, 18, 20, 22, 24, 26 embarquées, et un réseau d'alimentation auxiliaire 28 destiné à alimenter sous une tension entre phases efficace fondamentale inférieure à 450 volts des charges électriques auxiliaires de service.

Chaque chaîne électrique de traction 16, 18, 20, 22, 24, 26 comprend une série des convertisseurs électriques de traction, par exemple un convertisseur quatre quadrants plus un onduleur de type triphasé, permettant la mise en forme de l'énergie électrique fournie en entrée aux moteurs de traction du train. La consommation électrique de l'ensemble des chaînes électriques de traction est la partie la plus importante de l'énergie électrique consommée par le train 12.

Le premier réseau 14 de traction à tension élevée comprend trois transformateurs haute tension 30, 32, 34 de puissance élevée raccordés à une prise 36 de tension d'une ligne classique 38 de type caténaire à tension élevée au travers d'un pantographe 40.

Chaque transformateur 30, 32, 34 comprend respectivement deux lignes de sortie 42 et 44, 46 et 48, 50 et 52, chaque ligne de sortie étant respectivement raccordée à une entrée 54, 56, 58, 60, 62, 64 d'une chaîne électrique de traction 16, 18, 20, 22, 24, 26, seuls les raccordements de 42 et 44 à 54 et 56 étant illustrés sur la figure 1 pour plus de lisibilité.

Les chaînes électriques de traction 16, 18, 20, 22, 24 et 26 sont respectivement logées dans les voitures 2, 4, 8, 3, 6 et 9.

Le réseau d'alimentation auxiliaire 28 comprend des charges électriques auxiliaires de dissipation de l'énergie électrique 70, 72, 74, 76, 78, 80, 82, 84, 86, 88, 90, 94, 96, 98, 99, un bus 100 de fils électriques permettant la conduite et la distribution de l'énergie électrique aux charges électriques auxiliaires, et un ensemble de sources d'alimentation en énergie électrique 102, 104, 106, 108, 110, 112 dont la sortie se présente sous la forme ici d'une tension triphasée de 400 volts -50 Hz.

Le bus 100 de fils électriques d'alimentation est déployé le long du train 12. Il comprend un premier câble 114 et un deuxième câble 116 disjoints entre eux et non refermés sur eux-mêmes, chacun comportant trois fils conducteurs de phase, un ensemble de trois fils étant représenté par une seul trait continu sur la figure 1.

Chaque câble 114, 116 passe d'une voiture à une voiture adjacente par des jonctions souples 118, 120 constituées de portions de fils souples raccordés à des prises d'extrémités à chaque extrémité de voitures adjacentes.

Ici, les deux jonctions 118, 120 relient respectivement les deux câbles 114, 116 des voitures adjacentes.

Ainsi, le nombre de jonctions est de deux pour chaque liaison entre deux voitures adjacentes, une première jonction 118 étant associé au premier câble 114 et une deuxième jonction 120 étant associée au deuxième câble 116, soit au total 18 jonctions.

Chaque câble 114, 116 comprend respectivement trois sections de câble 122, 124, 126 et 128, 130, 132.

Les première 122, deuxième 124 et troisième 126 sections du premier câble 114 s'étendent respectivement depuis les voitures 1 à 3, les voitures 3 à 7, et les voitures 7 à 10.

La première section 122 est disjointe de la deuxième 124 par un interrupteur d'interconnexion 134 placé à l'état ouvert dans le mode normal de fonctionnement du réseau d'alimentation auxiliaire 28, l'interrupteur 134 étant disposé en série sur le premier câble 114 au niveau de la voiture 3. La deuxième section 124 est disjointe de la troisième 126 par un interrupteur 136 à l'état ouvert en mode normal, disposé en série sur le premier câble 114 au niveau de la voiture 7.

Les première 128, deuxième 130 et troisième 132 sections du deuxième câble 116 s'étendent respectivement depuis les voitures 1 à 4, les voitures 3 à 7, et les voitures 7 à 10.

La première section 128 est disjointe de la deuxième 130 par un interrupteur d'interconnexion 138 à l'état ouvert dans le mode normal de fonctionnement du réseau d'alimentation auxiliaire 28, disposé en série sur le deuxième câble 116 au niveau de la voiture 4. La deuxième section 130 est disjointe de la troisième 132 par un interrupteur 140 à l'état ouvert en mode normal, disposé en série sur le deuxième câble 116 au niveau de la voiture 7.

Ainsi, le bus 100 de fils électriques d'alimentation est découpé en éléments discrets et comprend six sections de câbles séparées et disjointes.

En plus des interrupteurs d'interconnexion 134,136, 138, 140 disposés respectivement en série sur un des câbles 114 et 116, des interrupteurs d'interconnexions 142, 144, 146 transversaux à l'état ouvert en mode normal sont disposés respectivement sur les voitures 2, 6, 8 entre respectivement les sections de câbles 122 et 128, 124 et 130, 126 et 132.

Les ensembles des charges auxiliaires 70, 72 sont situées respectivement sur les voitures 1 et 2, et sont raccordées sur la première section 122 du premier câble 114, la charge auxiliaire 72 étant raccordé indirectement au travers d'un interrupteur de raccordement 150.

Les ensembles de charges auxiliaires 74, 76, 78, 80 sont situées respectivement sur les voitures 4, 4, 6, 7 et sont raccordées sur la deuxième section 124 du premier câble 114, la charge auxiliaire 76 étant raccordé indirectement au travers d'un interrupteur de raccordement 152.

Les ensembles de charges auxiliaires 82, 84 sont situées respectivement sur les voitures 8, 10 et sont raccordées sur la troisième section 126 du premier câble 114, la charge auxiliaire 82 étant raccordée indirectement au travers d'un interrupteur de raccordement 154.

Les ensembles de charges auxiliaires 86, 88, 90 sont situées respectivement sur les voitures 2, 3, 3 et sont raccordées sur la première section 128 du deuxième câble 116, la charge auxiliaire 90 étant raccordée indirectement au travers d'un interrupteur de raccordement 156.

Les ensembles de charges auxiliaires 92, 94 sont situées respectivement sur les voitures 5, 6 et sont raccordées sur la deuxième section 130 du deuxième câble 116, la charge auxiliaire 94 étant raccordée indirectement au travers d'un interrupteur de raccordement 158.

Les ensembles de charges auxiliaires 96, 98, 99 sont situées respectivement sur les voitures 8, 9, 9 et sont raccordées sur la troisième section 132 du deuxième câble 116, la charge auxiliaire 99 étant raccordée indirectement au travers d'un interrupteur de raccordement 160.

Les charges auxiliaires se divisent en deux types de charge.

Le premier type de charges auxiliaires comprend les charges dites de confort notamment des appareils électriques domestiques de passagers (ordinateurs portables, appareils munis de batteries rechargeables) branchés sur des prises de voiture, des appareils de cuisine (four électrique ou à micro-ondes, réfrigérateur), des climatiseurs et des radiateurs. Les charges 70, 74, 78, 80, 84, 86, 88, 92, 96, 98 sont du premier type.

Le deuxième type de charges auxiliaires comprend les charges dites de traction destinées notamment au maintien des températures de fonctionnement des convertisseurs de puissance des chaînes de traction 16, 18, 20, 22, 24, 26. Ces charges sont par exemple des pompes de boucle à eau de refroidissement, des ventilateurs de refroidissement à air, des pompes à huile pour les paliers des moteurs. Les charges 72, 76, 82, 90, 94, 99 sont du deuxième type.

Les charges auxiliaires raccordées sur l'ensemble des sections forment le réseau global des charges auxiliaires terminales du réseau d'alimentation auxiliaire 28.

Sur chaque section de câbles 122, 124, 126, 128, 130, 132 est raccordée respectivement une source d'alimentation 102, 104 106, 108, 110, 112 sous la forme d'un convertisseur auxiliaire de puissance, abaisseur de tension, au travers d'un interrupteur de raccordement associé 150, 152, 154, 156, 158, 160 mis en position fermé en mode normal de fonctionnement du réseau d'alimentation auxiliaire 28, la charge auxiliaire de traction respective 72, 76, 82, 90, 94, 99 associée à la chaîne de traction 16, 18, 20, 22, 24, 26 étant raccordée respectivement entre l'interrupteur 150, 152, 154, 156, 158, 160 et le convertisseur auxiliaire 102, 104, 106, 108, 110, 112.

Chaque convertisseur auxiliaire 102, 104, 106, 108, 110, 112 est raccordé respectivement en une entrée 162, 164, 166, 168, 170, 172 à une sortie de la chaîne électrique de traction associée 16, 18, 20, 22, 24, 26.

La tension de sortie de chaque convertisseur auxiliaire est comprise entre 380 et 450 volts.

La puissance électrique totale délivrée par l'ensemble des convertisseurs auxiliaires 102, 104, 106, 108, 110, 112 à l'ensemble des charges est comprise entre 100 kW et 1MW.

Ici, la puissance d'alimentation de chaque convertisseur auxiliaire est égale au double de la somme des puissances électriques des ensembles de charges raccordées au bus 100 divisé par le nombre total de sections, c'est à dire ici six, du fait que les ensembles de charges électriques sont raccordées à chaque section de sorte que la puissance électrique consommée par section est sensiblement la même.

Chaque convertisseur auxiliaire 102, 104 106, 108, 110, 112 est refroidi respectivement par une boucle de refroidissement à eau 180, 182, 184, 186, 188, 190, localisée respectivement sur les voitures 2, 4, 8, 3, 6, 9 et servant également à refroidir les convertisseurs de la chaîne électrique de traction associée 16, 18, 20, 22, 24, 26.

Chaque chaîne électrique de traction 16, 18, 20, 22, 24, 26 est logée dans un coffre propre non représenté qui abrite également le convertisseur auxiliaire associé 102, 104, 106, 108, 110, 112.

De même, l'électronique de commande du convertisseur auxiliaire est intégrée avec l'électronique de commande de la chaîne de traction associée.

Un bloc de section associé à une section est défini comme une section avec l'ensemble des équipements raccordés à la section connexions comprises.

Sur la figure 1, seul est représenté le bloc de section 200 associé à la section 122. Le bloc de section 200 comprend le convertisseur auxiliaire 102, les ensembles des charges 70, 72, l'interrupteur 150 de raccordement du convertisseur auxiliaire 102 au bus 100, la jonction 108.

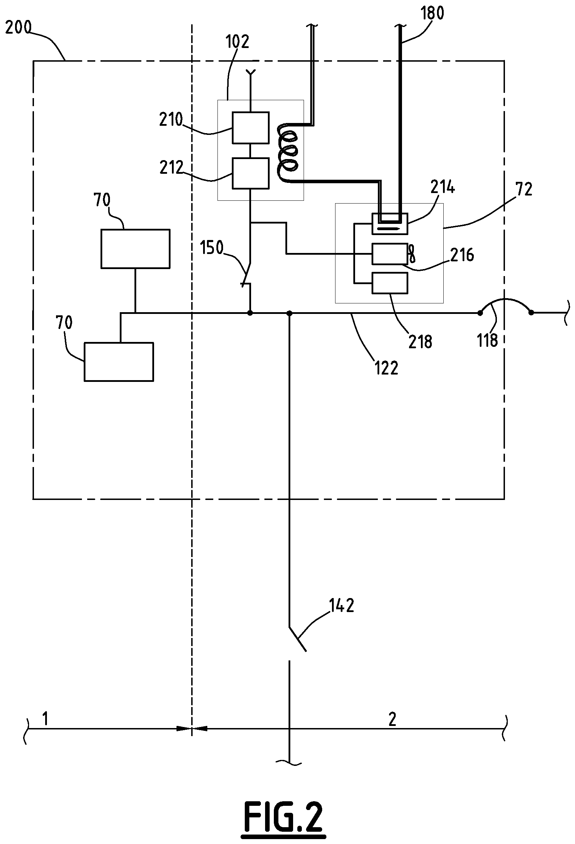

La figure 2 représente en détail le bloc de section 200 associé à la section 122, les détails de la description pouvant être repris de manière analogue pour des blocs de section non représentés sur la figure 1 et correspondant aux sections 124, 126, 128, 130 et 132.

Le convertisseur auxiliaire 102 comprend un hacheur 210 abaisseur de tension suivi d'un onduleur de tension triphasée 212.

Le convertisseur auxiliaire 102 est refroidi par la boucle de refroidissement à eau 180 déjà existante dans la conception classique d'une chaîne électrique de traction.

En effet, la boucle de refroidissement à eau sert principalement au refroidissement des convertisseurs de la chaîne électrique de traction 16, c'est-à-dire essentiellement un hacheur et un onduleur de traction, la chaîne électrique de traction 16 étant installée à proximité du convertisseur auxiliaire 102.

La charge auxiliaire de traction 72 comprend une pompe 214 destinée à faire circuler de l'eau dans la boucle de refroidissement à eau 180 et un ventilateur 216 servant à refroidir par air l'eau circulant dans la boucle 180.

La charge auxiliaire de traction 72 comprend également une pompe à huile 218.

Ainsi, l'efficacité d'un système de refroidissement par eau étant supérieure à celle d'un système de refroidissement par air, chaque boucle à eau permet de diminuer la surface d'échange thermique intégrée dans chaque convertisseur auxiliaire comparativement à celle requise avec un radiateur à air et un ventilateur. La masse et l'encombrement du convertisseur auxiliaire s'en trouve donc diminué et un ventilateur est également économisé.

Ainsi, la répartition le long du train 12 d'au moins trois convertisseurs d'alimentation auxiliaires, de puissance électrique individuelle plus petite que celle correspondant à un convertisseur auxiliaire d'un ensemble de deux redondé fournissant une alimentation centralisée, facilite l'utilisation et l'adaptation des boucles de refroidissement à eau locales, déjà prévues pour les chaînes électriques de traction, dans les dispositifs de refroidissement des convertisseurs auxiliaires.

En effet, le refroidissement supplémentaire demandé par un convertisseur auxiliaire à une boucle de refroidissement à eau devient compatible avec un surdimensionnement faible de celle-ci. Le surdimensionnement peut être absorbé dans la marge de conception prévue lors de la conception initiale de la boucle n'incluant pas un convertisseur auxiliaire de confort.

De plus, l'intégration d'un convertisseur auxiliaire dans le même coffre abritant la chaîne de traction permet un gain de masse.

De même, l'intégration de l'électronique de commande d'un convertisseur auxiliaire avec l'électronique de commande de la chaîne de traction associée permet un gain de masse.

Les interrupteurs d'interconnexion 134, 136, 138, 140, 142, 144, 146 permettent avantageusement en cas de panne d'un convertisseur auxiliaire d'assurer l'alimentation en mode secours de la section correspondante, raccordée au convertisseur en panne, par un convertisseur auxiliaire en bon état de marche raccordé à une section adjacente de la section à secourir.

L'équilibrage des ensembles de charges du réseau par section et la capacité d'un convertisseur à alimenter deux sections chargées permet à un seul convertisseur d'assurer l'alimentation de deux sections adjacentes.

Le fait d'intégrer les charges auxiliaires de traction avec les charges de confort permet avantageusement d'intégrer les convertisseurs auxiliaires de traction associés à une chaîne de traction en un seul convertisseur auxiliaire et de bénéficier ainsi d'un gain de masse par le facteur intégration.

Il est à noter que cette intégration est sans conséquence sur le surdimensionnement de la boucle à eau car le dimensionnement de la boucle à eau était déjà prévu pour refroidir les convertisseurs auxiliaires de traction dans la conception initiale de la boucle.

En variante, la puissance d'alimentation de chaque convertisseur auxiliaire est sensiblement égale à trois fois et demie la puissance électrique requise par une section.

Ainsi, en cas de panne d'un convertisseur auxiliaire, par exemple le convertisseur auxiliaire 104, les deux convertisseurs 102, 106 correspondant aux sections adjacentes 122, 126 peuvent alimenter par moitié en mode secours la section 124 associée en mode normal au convertisseur en panne 104 tout en continuant à alimenter leur section respective 122, 126 à laquelle il sont raccordés normalement.

En variante, la tension de sortie de chaque convertisseur est comprise entre 110 volts et 380 volts.

En variante, l'électronique de commande d'un convertisseur auxiliaire est déporté du coffre abritant la chaîne de traction.

## Revendications

1. Train de voitures ferroviaires comprenant :
une pluralité de chaînes électriques de traction (16, 18, 20) comprenant chacune un convertisseur de traction alimentant un moteur de traction du train, chaque chaîne électrique de traction ayant une boucle de refroidissement à eau (180, 182, 184) ;
un premier réseau d'alimentation électrique de traction (14) servant à alimenter les chaînes électriques de traction (16, 18, 20) ; et
un deuxième réseau d'alimentation électrique auxiliaire (28), le réseau d'alimentation auxiliaire (28) comprenant :
au moins un bus (100) de fils d'alimentation auxiliaire, comprenant au moins deux sections (122, 124, 126) de bus, sur chacune desquelles est raccordé un ensemble de charges auxiliaires (70, 72, 74, 76, 82, 84),
au moins deux convertisseurs d'alimentation auxiliaires (102, 104, 106), raccordables en entrée pour son alimentation à une source haute tension (38) chacun étant raccordé exclusivement et respectivement à une section (122, 124, 126) de bus auxiliaire,
chaque convertisseur auxiliaire (102, 104, 106) comportant en commun avec la chaîne électrique de traction (16, 18, 20) respective à laquelle il est raccordé en entrée, la boucle de refroidissement à fluide réfrigérant (180, 182, 184) servant à refroidir la chaîne électrique de traction (16, 18, 20).

2. Train de voitures ferroviaires selon la revendication 1, **caractérisé en ce que** le bus (100) de fils d'alimentation comprend au moins trois sections (122, 124, 126) de bus, sur chacune desquelles est raccordée un ensemble de charges auxiliaires (70, 72, 74, 76, 82, 84), et **en ce que** le réseau comprend au moins deux convertisseurs auxiliaires (102, 104, 106), chacun étant raccordé exclusivement et respectivement à une section (122, 124, 126) de bus auxiliaire, et **en ce que** chaque convertisseur auxiliaire (102, 104, 106) comporte en commun avec la chaîne électrique de traction (16, 18, 20) respective à laquelle il est raccordé en entrée, la boucle de refroidissement à fluide réfrigérant (180, 182, 184) servant à refroidir la chaîne de traction (16, 18, 20).

3. Train de voitures ferroviaires selon l'une des revendications 1 à 2, **caractérisé en ce que** chaque convertisseur auxiliaire (102, 104, 106) est intégré dans un coffre abritant la chaîne électrique de traction (16, 18, 20) à laquelle il est raccordé.

4. Train selon l'une des revendications 1 à 3, **caractérisé en ce que** chaque convertisseur auxiliaire (102, 104, 106) comprend une électronique de commande intégrée dans l'électronique de commande de la chaîne électrique de traction (16, 18, 20) à laquelle il est raccordé.

5. Train selon l'une des revendications 1 à 4, **caractérisé en ce qu'**il comprend des interrupteurs d'interconnexions (134, 136) permettant d'interconnecter deux à deux les sections (122, 124, 126) et des interrupteurs internes d'activation/désactivation permettant à chaque convertisseur auxiliaire (102, 104, 106) d'être au choix activé ou désactivé.

6. Train selon l'une des revendications 1 à 5, **caractérisé en ce que** la somme des puissances électriques délivrées par les convertisseurs auxiliaires (102, 104, 106) est comprise entre 100 kW et 1 MW, la tension de sortie de chaque convertisseur auxiliaire (102, 104, 106) est comprise entre 350 volts et 450 volts et la tension d'entrée de chaque convertisseur auxiliaire (102, 104, 106) est comprise entre 600 volts et 4000 volts.

7. Train selon l'une quelconque des revendications 1 à 6, **caractérisé en ce que** le bus (100) de fils d'alimentation comprend au moins trois sections (122, 124, 126, 128, 130, 132), et le nombre de convertisseurs auxiliaires est au moins égal à trois.

8. Train selon la revendication 7, **caractérisé en ce qu'**il comprend des interrupteurs d'interconnexion transversaux (142, 144, 146) de fermeture de chaîne permettant d'interconnecter les sections (122, 124, 126, 128, 130, 132) pour former une chaîne fermée de tronçons.

9. Train selon l'une des revendications 1 à 8, **caractérisé en ce que** les ensembles de charges électriques raccordées respectivement aux sections sont de puissances électriques sensiblement égales et la puissance d'alimentation de chaque convertisseur auxiliaire est sensiblement égale sans être inférieure au double de la somme des puissances électriques des ensembles de charges raccordées au bus divisé par le nombre total de tronçons.

10. Train selon l'une des revendications 1 à 8, **caractérisé en ce que** les ensembles de charges électriques raccordées respectivement aux sections sont de puissances électriques sensiblement égales et la puissance d'alimentation de chaque convertisseur est sensiblement égale sans être inférieure à trois fois et demie la somme des puissances électriques des ensembles de charges divisé par le nombre total de sections.

11. Train selon l'une des revendications 1 à 10, **caractérisé en ce que** chaque ensemble de charges auxiliaires (72, 76, 82) raccordé respectivement à une section (122, 124, 126) comprend une pompe (214) destinée à l'actionnement de la circulation d'eau de la boucle de refroidissement (180) servant à refroidir le convertisseur auxiliaire (102) raccordé à la section (122), ainsi qu'un ventilateur (216) de refroidissement de la boucle de refroidissement à eau (180).

12. Train selon l'une des revendications 1 à 11, **caractérisé en ce que** chaque ensemble de charges comprend un premier type de charges de confort (70, 74, 78, 80, 84, 86, 92, 96) destinées au confort de passager et un deuxième type de charges de traction (72, 76, 82, 90, 94, 99) destiné au maintien des températures de fonctionnement des équipements de puissance servant à la traction.

13. Train selon l'une des revendications 10 à 12, **caractérisé en ce que** la pompe (214) et le ventilateur (216) font partie du deuxième type de charge.

## Patentansprüche

1. Zug von Eisenbahnwaggons aufweisend:
Eine Mehrzahl von elektrischen Traktionsketten (16, 18, 20), die jeweils einen Traktions-Wandler aufweisen, der einen Traktionsmotor des Zugs versorgt, wobei jede elektrische Traktionskette eine Wasserkühlungsschleife (180, 182, 184) aufweist;
ein erstes Netzwerk zur elektrischen Traktionsversorgung (14), das zum Versorgen der elektrischen Traktionsketten (16, 18, 20) dient; und
ein zweites Netzwerk zur elektrischen Hilfs-Traktionsversorgung (28), wobei das Netzwerk zur Hilfs-Versorgung (28) aufweist:
mindestens einen Hilfsversorgungsleitungs-Bus (100), der mindestens zwei Bus-Abschnitte (122, 124, 126) aufweist, wobei mit jedem von diesen eine Menge von Hilfslasten (70, 72, 74, 76, 82, 84) verbunden ist,
mindestens zwei Hilfsversorgungswandler (102, 104, 106), die am Eingang für ihre Versorgung mit einer Hochspannungsquelle (38) verbindbar sind, wobei jede exklusiv und jeweils mit einem Hilfsbus-Abschnitt (122, 124, 126) verbunden ist,
wobei jeder Hilfswandler (102, 104, 106) gemeinsam mit der elektrischen Traktionskette (16, 18, 20), bezüglich der er am Eingang verbunden ist, die Kühlungsschleife mit Kühlflüssigkeit (180, 182, 184) aufweist, die dazu dient, die elektrische Traktionskette (16, 18, 20) zu kühlen.

2. Zug von Eisenbahnwaggons gemäß Anspruch 1, dadurch charakterisiert, dass der Versorgungsleitungsbus (100) mindestens drei Bus-Abschnitte (122, 124, 126) aufweist, wobei mit jedem von diesen eine Menge von Hilfslasten (70, 72, 74, 76, 82, 84) verbunden ist, und dadurch, dass das Netzwerk mindestens zwei Hilfswandler (102, 104, 106) aufweist, wobei jeder exklusiv und jeweils mit einem Hilfsbus-Abschnitt (122, 124, 126) verbunden ist und dadurch, dass jeder Hilfswandler (102, 104, 106) gemeinsam mit der elektrischen Traktionskette (16, 18, 20), bezüglich der er am Eingang verbunden ist, die Kühlungsschleife mit Kühlflüssigkeit (180, 182, 184) aufweist, die dazu dient, die elektrische Traktionskette (16, 18, 20) zu kühlen.

3. Zug von Eisenbahnwaggons gemäß einem der Ansprüche 1 bis 2, dadurch charakterisiert, dass jeder Hilfswandler (102, 104, 106) in einen Kasten integriert ist, der die elektrische Traktionskette (16, 18, 20) beherbergt, mit der er verbunden ist.

4. Zug gemäß einem der Ansprüche 1 bis 3, dadurch charakterisiert, dass jeder Hilfswandler (102, 104, 106) eine Steuerelektronik aufweist, die in der Steuerelektronik der elektrischen Traktionskette (16, 18, 20) integriert ist, mit der er verbunden ist.

5. Zug gemäß einem der Ansprüche 1 bis 3, dadurch charakterisiert, dass er Verbindungsschalter (134, 136), die es ermöglichen, die Abschnitte (122, 124, 126) paarweise zu verbinden und interne Aktivierungs/Deaktivierungsschalter aufweist, die es jedem Hilfswandler (102, 104, 106) ermöglichen, wahlweise aktiviert oder deaktiviert zu sein.

6. Zug gemäß einem der Ansprüche 1 bis 5, dadurch charakterisiert, dass die Summe der elektrischen Leistungen, die von den Hilfswandlern (102, 104, 106) geliefert werden, zwischen 100 kW und 1 MW liegt, die Ausgangsspannung jedes Hilfswandlers (102, 104, 106) zwischen 350 Volt und 450 Volt liegt und die Eingangsspannung jedes Hilfswandlers (102, 104, 106) zwischen 600 Volt und 4000 Volt liegt.

7. Zug gemäß einem der Ansprüche 1 bis 6, dadurch charakterisiert, dass der Versorgungsleitungsbus (100) mindestens drei Abschnitte (122, 124, 126, 128, 130, 132) aufweist und die Anzahl von Hilfswandlern mindestens gleich drei ist.

8. Zug gemäß Anspruch 7, dadurch charakterisiert, dass er Transversal-Kettenschließverbindungsschalter (124, 144, 146) aufweist, die es ermöglichen, die Abschnitte (122, 124, 126, 128, 130, 132) zum Bilden einer geschlossenen Kette von Teilstücken zu verbinden.

9. Zug gemäß einem der Ansprüche 1 bis 8, dadurch charakterisiert, dass die Mengen von elektrischen Lasten, die jeweils mit den Abschnitten verbunden sind, von elektrischen Leistungen sind, die im Wesentlichen gleich der Versorgungsleistung jedes Hilfswandlers und im Wesentlichen gleich, ohne kleiner zu sein, dem Doppelten der Summe von elektrischen Leistungen der Mengen von Lasten, die mit dem Bus verbunden sind, geteilt durch die Gesamtzahl von Teilstücken sind.

10. Zug gemäß einem der Ansprüche 1 bis 8, dadurch charakterisiert, dass die Mengen von Lasten, die jeweils mit den Abschnitten verbunden sind, von elektrischen Leistungen sind, die im Wesentlichen gleich der Versorgungsleistung jedes Hilfswandlers und im Wesentlichen gleich, ohne kleiner zu sein, dem Dreieinhalbfachen der Summe von elektrischen Leistungen der Mengen von Lasten, die mit dem Bus verbunden sind, geteilt durch die Gesamtzahl von Abschnitten sind.

11. Zug gemäß einem der Ansprüche 1 bis 10, dadurch charakterisiert, dass jede Menge von Hilfslasten (72, 76, 82), die jeweils mit einem Abschnitt (122, 124, 126) verbunden ist, eine Pumpe (214) aufweist, die dazu vorgesehen ist, die Zirkulation des Wassers der Kühlungsschleife (180) anzutreiben, die zum Kühlen des Hilfswandlers (102) dient, der mit dem Abschnitt (122) verbunden ist, sowie einen Ventilator (216) zum Kühlen der Wasserkühlungsschleife (180) aufweist.

12. Zug gemäß einem der Ansprüche 1 bis 11, dadurch charakterisiert, dass jede Menge von Lasten einen ersten Komfortlasttyp von Komfortlasten (70, 74, 78, 80, 84, 86, 92, 96) aufweist, die für den Passagierkomfort vorgesehen sind und einen zweiten Transaktions-Lasttyp (72, 76, 82, 90, 94, 99) aufweist, der zum Halten der Betriebstemperaturen der Leistungsbetriebsmittel vorgesehen ist, die der Traktion dienen.

13. Zug gemäß einem der Ansprüche 10 bis 12, dadurch charakterisiert, dass die Pumpe (214) und der Ventilator (216) einen Teil des zweiten Lasttyps bilden.

## Claims

1. A train of railway coaches comprising:
a plurality of electric traction chains (16, 18, 20) each comprising a traction converter supplying a traction motor of the train, each electric traction chain having a water cooling loop (180, 182, 184);
a first electric traction supply network (14) used to supply the electric traction chains (16, 18, 20); and
a second auxiliary electrical supply network (28), the auxiliary supply network (28) comprising:
at least one auxiliary supply wire bus (100) comprising at least two bus sections (122, 124, 126), to each of which there is connected a set of auxiliary loads (70, 72, 74, 76, 82, 84),
at least two auxiliary supply converters (102, 104, 106), which can be connected at their inputs, in order to power them, to a high voltage source (38), each converter being connected exclusively to one auxiliary bus section respectively,
each auxiliary converter (102, 104, 106) including, in common with the respective electric traction chain (16, 18, 20) to which it is connected at its input, the coolant cooling loop (180, 182, 184) used to cool the electric traction chain (16, 18, 20).

2. A train of railway coaches according to Claim 1, **characterized in that** the supply wire bus (100) comprises at least three bus sections (122, 124, 126), to each of which there is connected a set of auxiliary loads (70, 72, 74, 76, 82, 84), and **in that** the network comprises at least two auxiliary converters (102, 104, 106), each being connected exclusively to one auxiliary bus section (122, 124, 126) respectively, and **in that** each auxiliary converter (102, 104, 106) includes, in common with the respective electric traction chain (16, 18, 20) to which it is connected at its input, the coolant cooling loop (180, 182, 184) used to cool the traction chain (16, 18, 20);

3. A train of railway coaches according to either Claim 1 or Claim 2, **characterized in that** each auxiliary converter (102, 104, 106) is integrated in a cabinet housing the electric traction chain (16, 18, 20) to which it is connected.

4. A train according to any one of Claims 1 to 3, **characterized in that** each auxiliary converter (102, 104, 106) comprises control electronics integrated in the control electronics of the electric traction chain (16, 18, 20) to which it is connected.

5. A train according to any one of Claims 1 to 4, **characterized in that** it comprises interconnection switches (134, 136) for interconnecting the sections (122, 124, 126) in pairs and internal activation/deactivation switches enabling each auxiliary converter (102, 104, 106) to be selectively activated or deactivated.

6. A train according to any one of Claims 1 to 5, **characterized in that** the sum of the electrical power delivered by the auxiliary converters (102, 104, 106) is between 100 kW and 1 MW, the output voltage of each auxiliary converter (102, 104, 106) is between 350 volts and 450 volts and the input voltage of each auxiliary converter (102, 104, 106) is between 600 volts and 4000 volts.

7. A train according to any one of Claims 1 to 6, **characterized in that** the supply wire bus (100) comprises at least three sections (122, 124, 126, 128, 130, 132), and the number of auxiliary converters is at least equal to three.

8. A train according to Claim 7, **characterized in that** it comprises chain closure cross connection switches (142, 144, 146) for interconnecting the sections to form a closed chain of sections.

9. A train according to any one of Claims 1 to 8, **characterized in that** the sets of electrical loads connected, respectively, to the sections are of substantially equal electrical power levels and the supply power of each auxiliary converter is substantially equal to, without being less than, twice the sum of the electrical power levels of the sets of loads connected to the bus, divided by the total number of sections.

10. A train according to any one of Claims 1 to 8, **characterized in that** the sets of electrical loads connected, respectively, to the sections are of substantially equal electrical power levels and the supply power of each converter is substantially equal to, without being less than, three and a half times the sum of the electrical power levels of the sets of loads, divided by the total number of sections.

11. A train according to any one of Claims 1 to 10, **characterized in that** each set of auxiliary loads (72, 76, 82) which is connected, respectively, to a section (122, 124, 126) comprises a pump (214) intended to circulate water in the cooling loop (180) used to cool the auxiliary converter (102) connected to the section (122), and a fan (216) for cooling the water cooling loop (180).

12. A train according to any one of Claims 1 to 11, **characterized in that** each set of loads of comprises a first type of load for comfort (70, 74, 78, 80, 84, 86, 92, 96) intended for passenger comfort and a second type of load for traction (72, 76, 82, 90, 94, 99) intended to maintain the operating temperatures of the power equipment used for traction.

13. A train according to any one of Claims 10 to 12, **characterized in that** the pump (214) and the fan (216) form part of the second type of load.
